# EUROPEAN PATENT SPECIFICATION

(11) **EP 2 405 526 B1**
(45) Date of publication and mention of the grant of the patent: **03.07.2013**
(21) Application number: 10191315.0
(22) Date of filing: 16.11.2010
(51) Int. Cl.: H01M 10/50, H01M 2/10

(54) **Air-cooled battery pack**
Luftgekühltes Batteriepack
Bloc-batterie refroidi à l'air

(30) Priority: 06.07.2010 US 344361 P
(43) Date of publication of application: 11.01.2012
(73) Proprietor: Samsung SDI Co., Ltd., Gyeonggi-do (KR); Robert Bosch GmbH, 70442 Stuttgart (DE)
(72) Inventor: Sohn, Kwon, Gyeonggi-do (KR)
(74) Representative: Gulde Hengelhaupt Ziebig & Schneider

(56) References cited:
- EP-A1- 1 610 407
- WO-A1-2008/082111
- WO-A1-2010/073466
- JP-A- 2007 299 638
- US-A1- 2006 063 067
- US-A1- 2007 285 051

## Description

### TECHNICAL FIELD

### EMBODIMENTS RELATE TO AN AIR-COOLED BATTERY PACK.

### BACKGROUND ART

Generally, in hybrid vehicles or electric vehicles, which are capable of being driven by an interaction between an engine and a motor, a battery pack is provided as a power source. The battery pack includes a plurality of chargeable battery cells and a housing that receives the plurality of battery cells. Here, the plurality of battery cells is stacked in a horizontal direction and connected to each other in series.

Since relatively high current is applied or outputted to/from the battery pack when charged or discharged, a large amount of heat may occur in each of the battery cells. Thus, the respective battery cells may be swelled by expansion of an inner volume thereof. When the battery cells are swelled, an internal resistance may be increased to deteriorate electrical performance of the battery cells. That is, the battery cells may be deteriorated.

In WO 2010/073466 A1, EP 1 610 407 A1 and US 2007/285051 A1 battery packs of the prior art are disclosed.

### SUMMARY

An aspect of the present invention provides an air-cooled battery pack capable of reducing a temperature variation between stacked battery cells.

Another aspect of the present invention provides an air-cooled battery pack capable of improving strength of a housing.

According to the invention, a battery pack is provided as defined in the claims. The battery pack comprises a plurality of battery cells stacked along a first axis, and a housing adapted to receive the plurality of battery cells, wherein the housing comprises a main body adapted to support the plurality of battery cells and a first duct extending along the first axis and being arranged on a first side of the main body. The first duct comprises an air inlet at a first end of the first duct and a first chamfer at a second end of the first duct, wherein the second end is opposite to the first end. The first duct is adapted to supply air to the battery cells. At least one channel is formed between the battery cells, wherein the at least one channel is connected to the first duct.

Since the air-cooled battery pack according to the embodiments includes a chamfer in a region in which an airflow direction is significantly changed in the first duct, an air vortex does not occur within the first duct. Thus, the air is supplied to the all battery cells at a uniform speed and pressure. Also, the temperature variation between the battery cells is reduced. That is to say, the temperature variation between the inlet and outlet of the battery pack is reduced.

The battery pack of the invention further comprises a second duct extending along a first axis and being arranged on a second side of the main body, the second side being the opposite side of the first side, the second duct comprising an air outlet and being adapted to exhaust air to the outside, wherein the at least one channel is connected to the second duct.

The first side of the main body is in one embodiment the upper side of the battery cells and the second side is the lower side of the battery cells.

The first duct and the second duct preferably extend over the whole length and the whole width of the stacked battery cells in order to fully cover top and bottom surfaces of the battery cells.

Preferably, a second chamfer is arranged at the first end of the second duct, the first end being the opposing end of the end where the outlet is formed. That is, also a vortex in the second duct does not occur.

The first duct comprises an outer surface and inclined side surfaces disposed on both sides of the outer surface, wherein each of the inclined side surfaces is oriented at an obtuse angle with respect to an axis perpendicular to the outer surface.

The outer surface is either the top or the bottom surface and the respective perpendicular axis is either the positive or the negative z-axis.

The second duct comprises an outer surface and inclined side surfaces disposed on both sides of the outer surface, wherein each of the inclined side surfaces is oriented at an obtuse angle with respect to an axis perpendicular to the outer surface.

The first chamfer is preferably oriented at an obtuse angle relative to an axis perpendicular to an outer surface of the first duct. The second chamfer is preferably oriented at an obtuse angle relative to an axis perpendicular to an outer surface of the second duct. The obtuse angle may range between 120° and 150°.

The obtuse angle preferably ranges between greater than 90° and smaller than 180°, more preferably between greater than 120° and 150°, more preferably between greater than 128° and 142° and still more preferably the obtuse angle is 135°.

In one embodiment, at least one guide vane is disposed on an outer surface of the first duct, the at least one guide vane protruding toward the battery cells.

Since the air-cooled battery pack according to the embodiments further includes at least one air guide vane by which the airflow direction is switched downward in the first duct, the air is supplied to the all battery cells at the uniform speed and pressure. Therefore, the temperature variation between the battery cells is further reduced. That is, the temperature variation between the inlet and outlet of the battery pack is further reduced.

Also, since the air-cooled battery pack according to the embodiments at least one air guide vane in the first duct, the housing is improved in strength.

The guide vane preferably has a width less than that of the outer surface of the first duct measured along the second axis. The guide vane preferably has a protruding depth less than a height of the inclined side surfaces of the first duct measured along the normal vector of the outer surface.

The guide vane may overlap with a projection of at least one of the 8th to the 12th battery cell along the normal vector of the top surface, the 8th to the 12th battery cell being counted from an inlet of the first duct.

The battery cells may be stacked along the first axis in at least two or more adjacent rows, and the first duct and the second duct may have a width extending over the at least two rows of stacked battery cells.

Preferably, a ratio of the surface area of the cross-section of the inlet and the surface area of the cross-section of the outlet ranges between 0.5 and 2. The ratio of the surface area of the cross-section of the inlet and the surface area of the sum of the cross-sections of all channels may range between 0.5 and 2.

Additionally, a heatsink may be disposed between each pair of adjacent battery cells, each heatsink comprising a plurality of trenches forming the channels being adapted to provide a flow passage for a heat transfer medium between the first duct and the second duct.

The at least one channel may be formed by a gap between adjacent battery cells.

A plurality of channels may be uniformly dispersed over a longitudinal axis of the heatsink. The heatsink may be formed of a material having a thermal conductivity of greater than 100 W/(m*K), preferably greater than 200 W/(m*K), more preferably greater than 300 W/(m*K) and still more preferably greater than 400 W/(m*K).

Preferably, a relationship between the surface area of the cross-section of the first and second ducts and the surface area of the cross-section of the battery cells is between 10-30%.

The relationship between the overall surface area of the cross-section of the heat sink 110 and the surface area of the sum of the cross-section of all trenches is between 20-70%.

### BRIEF DESCRIPTION OF THE DRAWINGS

FIGS. 1A through 1E illustrate perspective, Y-Y sectional, X-X sectional, plan, and bottom views of an air-cooled battery pack according to an embodiment;
FIG. 2 illustrates a plan view of a relation between a battery cell and a heatsink having a trench in an air-cooled battery pack according to an embodiment;
FIG. 3 illustrates an airflow diagram of a battery pack according to an embodiment;
FIG. 4A through 4D illustrate perspective, X-X sectional, Y-Y sectional, and plan views of an air-cooled battery pack according to another embodiment;
FIG. 5 illustrates an airflow diagram of a battery pack according to another embodiment;
FIG. 6 illustrates a sectional view of an air-cooled battery pack according to another embodiment;
FIG. 7 illustrates an airflow diagram of a battery pack according to another embodiment;
FIG. 8 illustrates a sectional view of an air-cooled battery pack according to another embodiment; and
FIG. 9 illustrates a sectional view of an air-cooled battery pack according to another embodiment.

### DETAILED DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the disclosure to those skilled in the art.

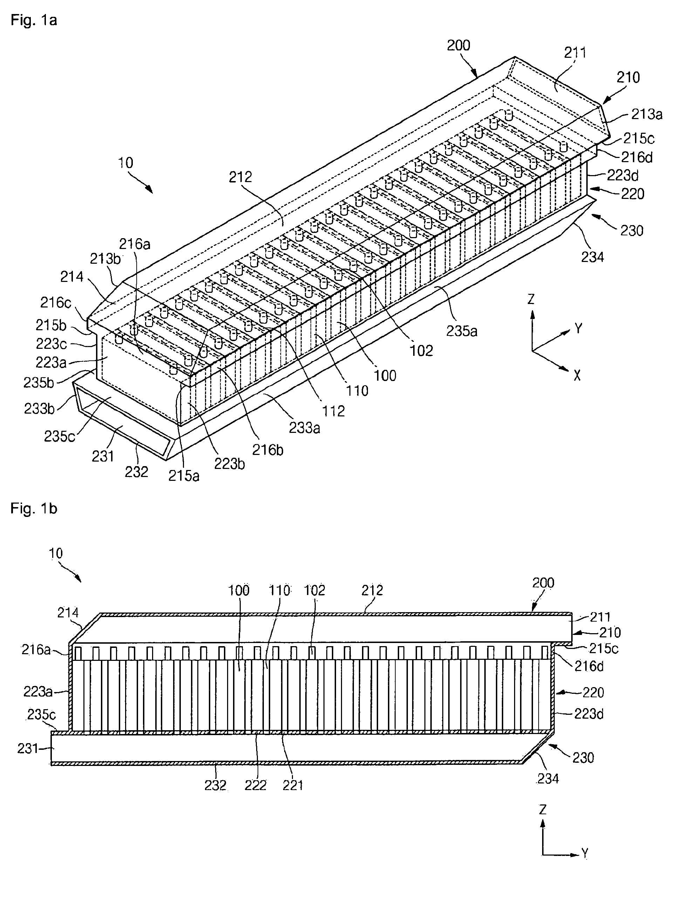

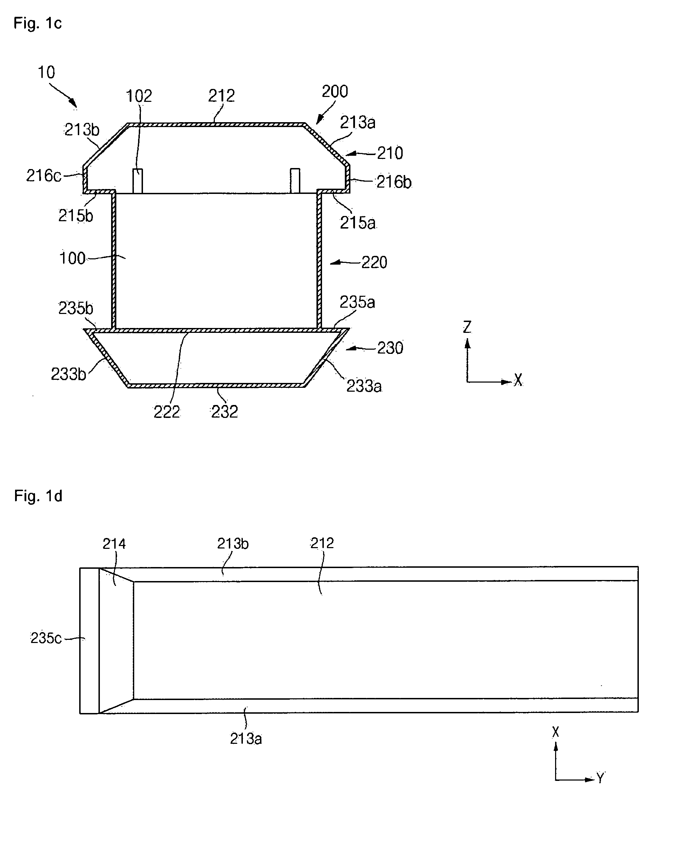

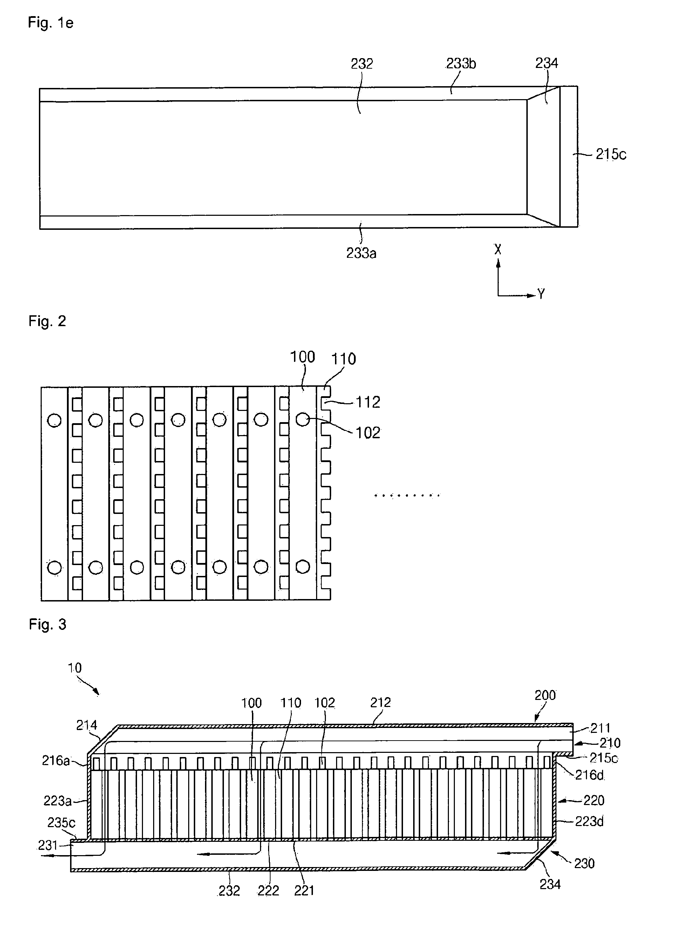

FIGS. 1A through 1E illustrate perspective, Y-Y sectional, X-X sectional, plan, and bottom views of an air-cooled battery pack according to an embodiment.

An air-cooled battery pack 10 according to an embodiment includes a plurality of battery cells 100 and a housing 200. Here, the housing 200 includes a first duct 210, a main body 220, and a second duct 230. In addition, in Fig. 1A-1E, the air flows in from the top. However, the air may also enter the space between the battery cells 100 from below. The battery cells 100 may be one of a general lithium-ion battery and lithium polymer battery, or its equivalent. The plurality of battery cells 100 may be horizontally stacked in a line. Also, the plurality of battery cells 100 may be horizontally stacked in plural lines. A space through which air passes may be defined between respective adjacent battery cells 100, or a heatsink 110 may be disposed between respective adjacent battery cells 100. A trench 112 may be vertically defined in the heatsink 110, and thus, air may pass through the trench 112. Non-described reference numeral 102 in drawings represents a terminal provided on the battery cell 100.

The housing 200 surrounds the plurality of battery cells 100 to protect the battery cells 100 from external environment. In addition, an airflow path is defined in the housing 200 to effectively cool the battery cells 100.

As described above, the housing 200 includes the first duct 210, the main body 220, and the second duct 230. The housing 200 may be formed of one of a general plastic, metal, and ceramic, or its equivalent. Here, the present embodiment is not limited to the material. The first duct 210 is disposed above the battery cell 100. The first duct 210 includes an inlet 211 through which air is introduced. Furthermore, the first duct 210 includes a top surface 212, inclined surfaces 213a and 213b disposed on both sides of the top surface 212, and a first chamfer 214 defined in a position opposite to that of the inlet 211. Also, four side surfaces 216a, 216b, 216c, and 216d are disposed below the inlet 211, the inclined surfaces 213a and 213b, and the first chamfer 214, respectively. Two connection surfaces 215a and 215b are disposed below the two side surfaces 216b and 216c, respectively. The two connection surfaces 215a and 215b are connected to the main body 220. The four side surfaces 216a, 216b, 216c, and 216d are opened in a vertical direction. Thus, the air introduced through the first duct 210 is supplied to the lower battery cell 100 through a path defined by the top surface 212, the inclined surfaces 213a and 213b, the first chamfer 214, and the four side surfaces 216a, 216b, 216c, and 216d. Here, the first chamfer 214 and the inclined surfaces 213a and 213b prevent air vortex from occurring. The reference numeral 215c is connection surface that disposed below the inlet 211 and connected to the side surface 216d. The surfaces 121, 213a, 213b, 215a, 215b, 216a, 216b, 222, 232, 233a, and 233b are preferably planar surfaces.

The main body 220 is disposed below the first duct 210. The main body 220 includes a lower support surface 222 supporting lower portions of the plurality of battery cells 100 and four side support surfaces 223a, 223b, 223c, and 223d supporting side portions of the battery cells 100. Furthermore, a through-hole 221 is defined at a position corresponding to a space between the lower support surface 222 and the battery cells 100. Thus, the air supplied from the first duct 210 flows into the second duct 230 through the through-hole 221.

The second duct 230 is disposed below the main body 220. The second duct 230 includes an outlet 231 through which air is exhausted. Furthermore, the second duct 230 includes a bottom surface 232, inclined surfaces 233a and 233b disposed on both sides of the bottom surface 232, and a second chamfer 234 defined in a direction opposite to that of the outlet 231. Also, three connection surfaces 235a, 235b, and 235c are disposed above the inclined surfaces 233a and 233b and the outlet 231. The three connection surfaces 235a, 235b, and 235c are connected to the main body 220. The air exhausted from the through-hole 221 of the main body 220 is exhausted through the outlet 231 via a path defined by the bottom surface 232, the inclined surfaces 233a and 233b, and the second chamfer 234. Here, the second chamfer 234 and the inclined surfaces 233a and 233b prevent air vortex from occurring.

FIG. 2 illustrates a plan view of a relation between a battery cell and a heatsink having a trench in an air-cooled battery pack according to an embodiment.

Referring to FIG. 2, the heatsink 110 may be disposed between adjacent battery cells 100. Also, a plurality of trenches 112 may be defined in the heatsink 110. Thus, air flows from the first duct 210 to the second duct 230 through the trenches 112. That is, air supplied from the first duct 210 easily flows into the second duct 230 through the trenches 112 of the heatsink 110. Heat generated from the battery cells 100 is removed by the air flowing through the trenches 112.

Furthermore, the heatsink 110 may be formed of aluminum having superior thermal dissipation performance or its equivalent, but is not limited thereto. Since the through-hole 221 is defined in the lower support surface 222 of the main body 220 corresponding to the heatsink 110, the air flows from the first duct 210 to the second duct 230 through the through-hole 221.

FIG. 3 illustrates an airflow diagram of a battery pack according to an embodiment. Referring to FIG. 3, air is introduced through the inlet 211 of the first duct 210. Then, the air is supplied to the lower battery cell 100. Thus, the battery cell 100 is cooled. An airflow direction is significantly changed by the first chamfer 214 defined in an end of the first duct 210. However, since the first chamfer 214 is oriented at an obtuse angle relative to the top surface 212, but a right angle, the air vortex does not occur. Furthermore, since the side surface 216a oriented at an obtuse angle relative to the first chamfer 214 is further provided, the air vortex does not occur. That is, the air vortex does not occur by the first chamfer 214 and the side surface 216a adjacent to the first chamfer 214. Also, since the inclined surfaces 213a and 213b are oriented at an obtuse angle relative to the top surface 212, the air vortex does not occur by the inclined surfaces 213a and 213b. Furthermore, since the side surfaces 216b and 216c oriented at an obtuse angle relative to the inclined surfaces 213a and 213b are further provided, the air vortex does not occur. The air supplied from the first duct 210 is completely exhausted into the second duct through the space between respective adjacent battery cells 100 or the trenches 112 defined in the heatsink 110 (which is disposed between respective adjacent battery cells 100). That is, the air is completely exhausted to the outside through the outlet 231 of the second duct 230.

Here, an airflow direction is significantly changed by the second chamfer 234 defined in the second duct 230. However, since the second chamfer 234 is oriented at an obtuse angle relative to the side surface 223d of the main body 220 or the bottom surface 232 of the second duct 230, the air vortex does not occur. Also, since the inclined surfaces 233a and 233b disposed on the second duct 230 are oriented at an obtuse angle relative to the main body 220 or the bottom surface 232 of the second duct 230, the air vortex does not occur.

Therefore, in the battery pack 10 according to an embodiment, the air vortex does not occur in a specific region of the housing 200. Thus, since the air flows at relatively uniform speed and pressure within the housing 200, a temperature variation between the battery cells 100 is reduced. That is to say, the battery cell 100 adjacent to the inlet 211 of the battery pack 10 has a temperature nearly similar to that of the battery cell 100 adjacent to the outlet 231 of the battery pack 10.

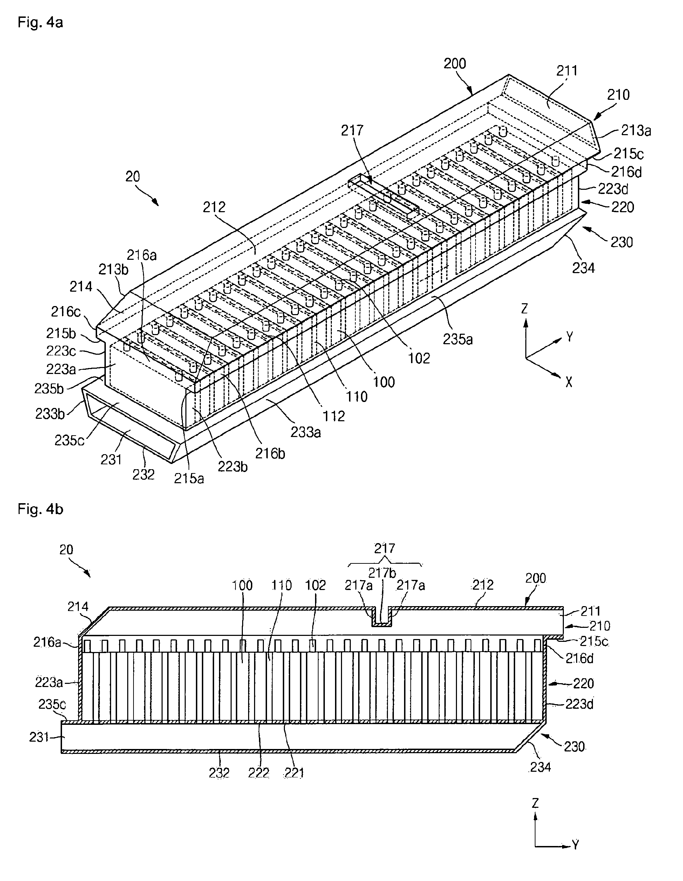

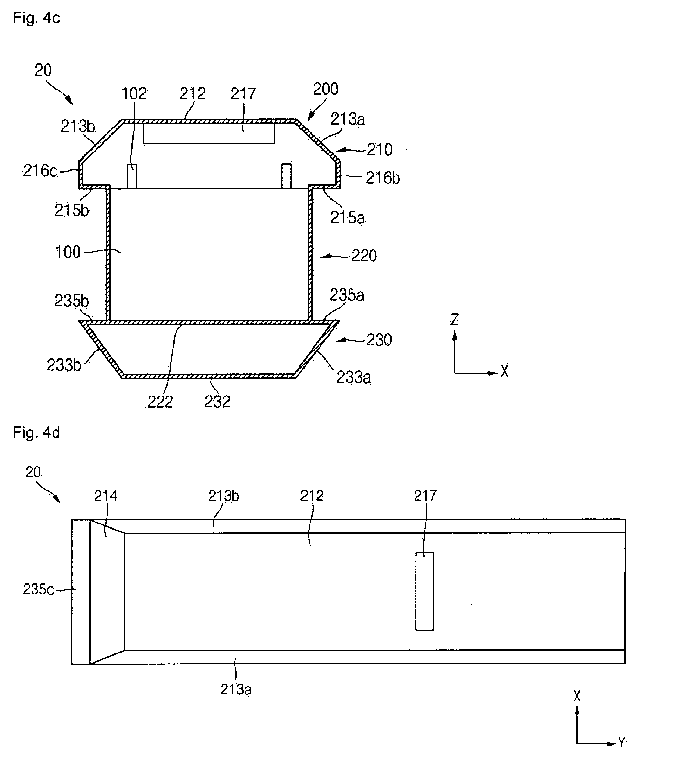

FIG. 4A through 4D illustrate perspective, X-X sectional, Y-Y sectional, and plan views of an air-cooled battery pack according to another embodiment. Descriptions of the same structure as that of the above-described embodiment will be omitted. Referring to FIGS. 4A through 4D, a battery pack 20 according to another embodiment may further include an air guide vane 217 on a housing 200. In particular, the air guide vane 217 may be disposed on a first duct 210.

The air guide vane 217 may protrude downward from a top surface 212 of the first duct 210. That is, the air guide vane 217 may have four side surfaces 217a extending downward by a certain length from the top surface 212 of the first duct 210 and a bottom surface 217b connected to the four side surfaces 217a. That is, the air guide vane 217 may be integrated with the first duct 210. Alternatively, the air guide vane 217 may be attached to the top surface 212 of the separately prepared first duct 210. Furthermore, although the air guide vane 217 has a square shape in plan or section, the air guide vane 217 may have various shapes such as a triangular shape, semicircular shape, and a half oval shape.

The air guide vane 217 has a width less than that of the top surface 212 of the first duct 210 in an X-X direction. Thus, a portion of the air introduced into the first duct 210 may be switched to a lower side through the air guide vane 217, and the other portion of the air may straightly flow through a space between the air guide vane 217 and the inclined surfaces 213a and 213b. Also, the air guide vane 217 has a thickness less than heights of the inclined surfaces 213a and 213b in a Z-Z direction. Thus, the air introduced into the first duct 210 continuously flows in a horizontal direction.

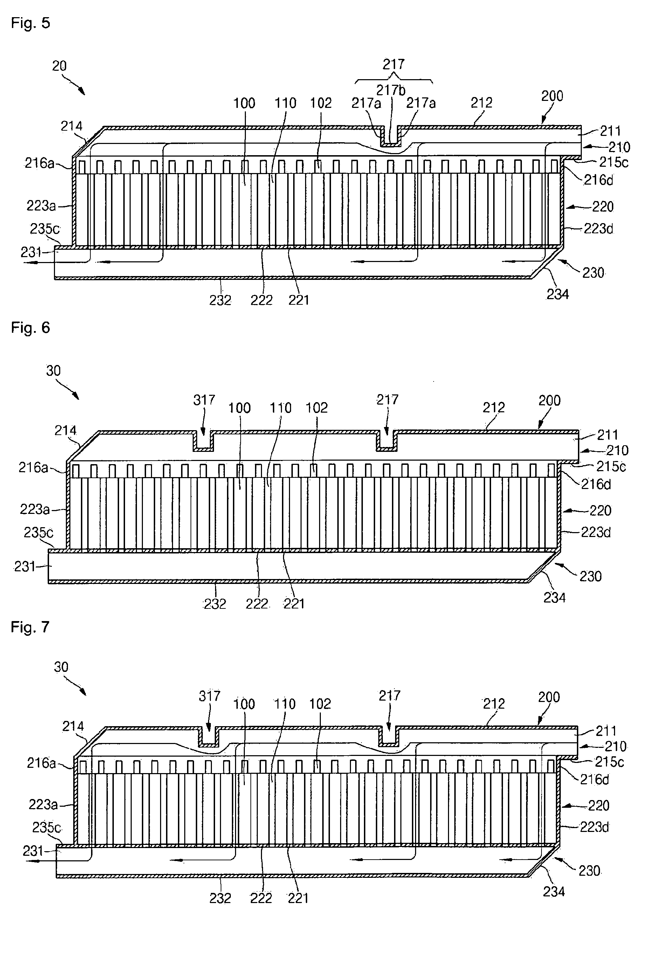

Also, the air guide vane 217 may be disposed in a region corresponding to the approximately 10^{th} battery cell 100 from an inlet 211 of the housing 200. However, the present embodiment is not limited to the installation position of the air guide vane 217. That is, the air guide vane 217 may be disposed at various positions according to a position of the inlet 211 defined in the first duct 210 and a thickness of the battery cell 100. FIG. 5 illustrates an airflow diagram of a battery pack according to another embodiment. When an inventor tests a housing 200 to which an air guide vane 217 is not provided, it was seen that a speed and pressure of air are relatively slow and low in a region adjacent to an inlet 211 of a first duct 210. It is assumed that because the inlet 211 of the first duct 210 is disposed above a 1^{st} battery cell 100 (the most right battery cell in FIG. 5). Furthermore, since the speed and pressure of the air are relatively slow and low, approximately 1^{st} through 5^{th} battery cells are effectively not cooled. Thus, the approximately 1^{st} through 5^{th} battery cells have relatively high temperatures. Therefore, the inventor performed again a cooling test after the air guide vane 217 is disposed at a position corresponding to that of approximately 10^{th} battery cell 100. According to the test results, it was seen that the speed and pressure of the air in the region corresponding to the 10^{th} battery cell 100 are nearly similar to those of the air in the other region. Thus, the 1^{st} through 10^{th} battery cells 100 have temperatures nearly similar to those of the battery cells disposed in the other regions. That is, according to the present embodiment, it was confirmed that a temperature difference between the battery cell 100 adjacent to the inlet 211 and the battery cell 100 adjacent to the outlet 231 is very small due to the installation of the air guide vane 217.

FIG. 6 illustrates a sectional view of an air-cooled battery pack according to another embodiment, and FIG. 7 illustrates an airflow diagram of a battery pack according to another embodiment.

Referring to FIGS. 6 and 7, a battery pack 30 according to the present embodiment may include at least two or more air guide vanes 217 and 317 on a first duct 210 of a housing 200. Since air forcingly flows downward by the air guide vanes 217 and 317, the air may be supplied to all battery cells 100 at uniform speed and pressure. Thus, the all battery cells 100 within the housing 200 may have a uniform temperature.

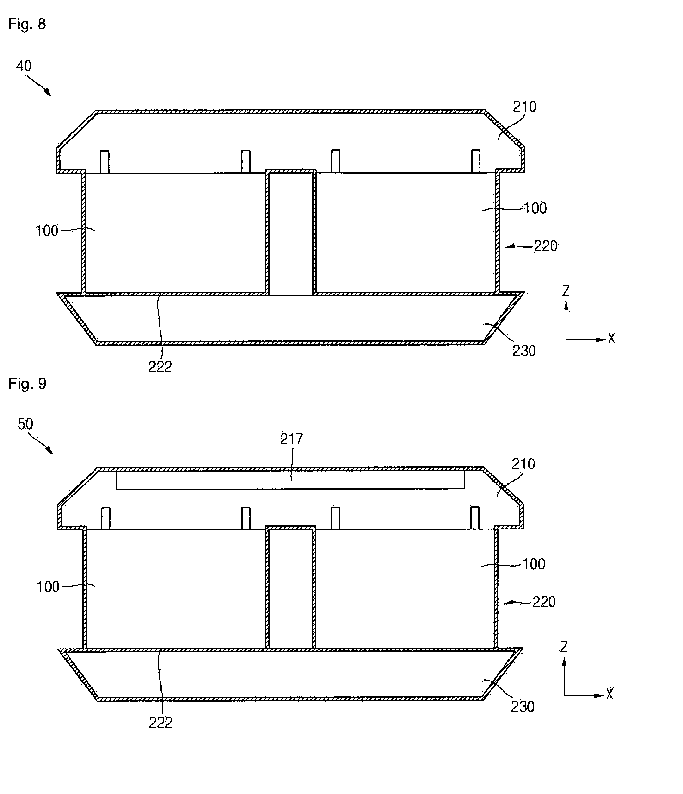

FIG. 8 illustrates a sectional view of an air-cooled battery pack according to another embodiment.

Referring to FIG. 8, a battery pack 40 according to the present embodiment includes battery cells 100 stacked horizontally in at least two or more rows. That is, the battery cells 100 may be horizontally stacked on a lower support surface 222 of a main body 220 in at least two more rows. Furthermore, a first common duct 210 having a relatively wide region is disposed above the main body 220, and a second common duct 230 having a relatively wide region is disposed below the main body 220. Thus, air is supplied through the first common duct 210 to cool the battery cells 100 stacked in two rows and disposed in the main body 220. Furthermore, the air cooling the battery cells 100 is exhausted to the outside through the second common duct 230.

FIG. 9 illustrates a sectional view of an air-cooled battery pack according to another embodiment.

Referring to FIG. 9, a battery pack 50 according to the present embodiment includes battery cells stacked horizontally in at least two or more rows. Simultaneously, the battery pack 50 includes a common air guide vane 217disposed on a first duct 210. Here, a portion of air supplied through the first duct 210 is switched downward by the air guide vane 217. Thus, the air having a uniform speed and pressure is supplied to the battery cells stacked horizontally on a lower support surface 222 of a main body 220 in the two or more rows. Thus, the battery cells 100 stacked horizontally in the two or more rows have nearly uniform temperatures. That is to say, a temperature difference between the battery cell 100 adjacent to an inlet and the battery cell 100 adjacent to the outlet is very small.

## Claims

1. A battery pack (10, 20, 30, 40, 50) comprising a plurality of battery cells (100) stacked along a first axis; and a housing (200) adapted to receive the plurality of battery cells (100), wherein the housing (200) comprises a main body (220) adapted to support the plurality of battery cells (200), a first duct (210) extending along the first axis and being arranged on a first side of the main body (220), the first duct (210) comprising an air inlet (211) at a first end of the first duct (210) and a first chamfer (214) at a second end of the first duct (210), the second end being opposite to the first end, and the first duct (210) being adapted to supply air to the battery cells (100); and at least one channel formed between the battery cells (100), the at least one channel being connected to the first duct (210) wherein the first duct (210) comprises an outer surface (212) and inclined side surfaces (213a, 213b) disposed on both sides of the outer surface (212), wherein each of the inclined side surfaces (213a, 213b) is oriented at an obtuse angle with respect to an axis perpendicular to the outer surface (212)further comprising a second duct (230) extending along a first axis and being arranged on a second side of the main body (220), the second side being the opposite side of the first side, the second duct (230) comprising an air outlet (231) and being adapted to exhaust air to the outside, wherein the at least one channel is connected to the second duct (230),
**characterized in that**
the second duct (230) comprises an outer surface (232) and inclined side surfaces (233a, 233b) disposed on both sides of the outer surface (232), wherein each of the inclined side surfaces (233a, 233b) is oriented at an obtuse angle with respect to an axis perpendicular to the outer surface (232).

2. The battery pack (10, 20, 30, 40, 50) of claim 1, wherein the first side of the main body (220) is the upper side of the battery cells (100) and the second side is the lower side of the battery cells (100).

3. The battery pack (10, 20, 30, 40, 50) according to any one of the preceding claims, wherein the first duct (210) and/or the second duct (230) extend over the whole length and the whole width of the stacked battery cells (100).

4. The battery pack (10, 20, 30, 40, 50) according to any one of the preceding claims 2 to 4, wherein a second chamfer (234) is arranged at the first end of the second duct (230), the first end being the opposing end of the end where the outlet (231) is formed.

5. The battery pack (10, 20, 30, 40, 50) according to any one of preceding claims, wherein the first chamfer (214) is oriented at an obtuse angle relative to an axis perpendicular to an outer surface (212) of the first duct (210) and/or wherein the second chamfer (234) is oriented at an obtuse angle relative to an axis perpendicular to an outer surface (232) of the second duct (230).

6. The battery pack (10, 20, 30, 40, 50) according to any one of the claims 1 to 5, wherein the obtuse angle ranges between 120° and 150°.

7. The battery pack (10, 20, 30, 40, 50) according to any one of the preceding claims, wherein at least one guide vane (217, 317) is disposed on an outer surface of the first duct (210), the at least one guide vane (217, 317) protruding toward the battery cells (100).

8. The battery pack (10, 20, 30, 40, 50) according to claim 7, wherein the guide vane (217, 317) has a width less than that of the outer surface (212) of the first duct (210) measured along the second axis (X) and/or has a protruding depth less than a height of the inclined side surfaces (213a, 213b) of the first duct (210) measured along the normal vector (Z) of the outer surface (212).

9. The battery pack (10, 20, 30, 40, 50) according to any one of the preceding claims, wherein the battery cells (100) are stacked along the first axis (Y) in at least two or more adjacent rows, and the first duct (210) and the second duct (230) have a width extending over the at least two rows of stacked battery cells (100).

10. The battery pack (10, 20, 30, 40, 50) according to any one of the preceding claims, wherein a ratio of the surface area of the cross-section of the inlet (211) and the surface area of the cross-section of the outlet (231) ranges between 0.5 and 2, and/or wherein a ratio of the surface area of the cross-section of the inlet (211) and the surface area of the sum of the cross-sections of all channel (112) ranges between 0.5 and 2.

11. The battery pack (10, 20, 30, 40, 50) according to one of the preceding claims, wherein a heatsink (110) is disposed between each pair of adjacent battery cells (100), each heatsink (110) comprising a plurality of trenches (112) forming the channels being adapted to provide a flow passage for a heat transfer medium between the first duct (210) and the second duct (230).

12. The battery pack (10, 20, 30, 40, 50) according to any of the preceding claims 1-10, wherein the at least one channel is formed by a gap between adjacent battery cells (100).

## Patentansprüche

1. Batteriepack (10, 20, 30, 40, 50), aufweisend eine Vielzahl von Batteriezellen (100), die entlang einer ersten Achse gestapelt sind; und ein Gehäuse (200), das zum Erhalt der Vielzahl der Batteriezellen (100) ausgebildet ist, wobei das Gehäuse (200) einen Hauptkörper (220), der zum Stützen der Vielzahl der Batteriezellen (200) ausgebildet ist, einen ersten Kanal (210), der sich entlang der ersten Achse erstreckt und auf einer ersten Seite des Hauptkörpers (220) angeordnet ist, aufweist, wobei der erste Kanal (210) einen Lufteinlass (211) an einem ersten Ende des ersten Kanals (210) und eine erste abgeschrägte Kante (214) an einem zweiten Ende des ersten Kanals (210) aufweist, wobei das zweite Ende dem ersten Ende gegenüberliegt, und wobei der erste Kanal (210) zur Versorgung der Batteriezellen (100) mit Luft ausgebildet ist; und zumindest einen Kanal, der zwischen den Batteriezellen (100) ausgebildet ist, wobei der zumindest eine Kanal mit dem ersten Kanal (210) verbunden ist, wobei der erste Kanal (210) eine Außenfläche (212) und schräge Seitenflächen (213a, 213b) aufweist, die auf beiden Seiten der Außenfläche (212) angeordnet sind, wobei jede der schrägen Seitenflächen (213a, 213b) in einem stumpfen Winkel bezüglich einer zur Außenfläche (212) senkrechten Achse ausgerichtet ist, wobei der Batteriepack (10, 20, 30, 40, 50) weiterhin einen zweiten Kanal (230) aufweist, der sich entlang einer ersten Achse erstreckt und auf einer zweiten Seite des Hauptkörpers (220) angeordnet ist, wobei die zweite Seite die der ersten Seite gegenüberliegende Seite ist, wobei der zweite Kanal (230) einen Luftauslass (231) aufweist und zum Auslassen von Luft nach außen ausgebildet ist, wobei der zumindest eine Kanal mit dem zweiten Kanal (230) verbunden ist,
**dadurch gekennzeichnet, dass**
der zweite Kanal (230) eine Außenfläche (232) und schräge Seitenflächen (233a, 233b) aufweist, die auf beiden Seiten der Außenfläche (232) angeordnet sind, wobei jede der schrägen Seitenflächen (233a, 233b) in einem stumpfen Winkel bezüglich einer zur Außenfläche (232) senkrechten Achse ausgerichtet ist.

2. Batteriepack (10, 20, 30, 40, 50) nach Anspruch 1, wobei die erste Seite des Hauptkörpers (220) die obere Seite der Batteriezellen (100) ist und die zweite Seite die untere Seite der Batteriezellen (100) ist.

3. Batteriepack (10, 20, 30, 40, 50) nach einem der vorhergehenden Ansprüche, wobei sich der erste Kanal (210) und/oder der zweite Kanal (230) über die gesamte Länger und die gesamte Breite der gestapelten Batteriezellen (100) erstrecken.

4. Batteriepack (10, 20, 30, 40, 50) nach einem der vorhergehenden Ansprüche 2 bis 4, wobei eine zweite abgeschränkte Kante (234) am ersten Ende des zweiten Kanals (230) angeordnet ist, wobei das erste Ende das dem Ende, an dem der Auslass (231) ausgebildet ist, gegenüberliegende Ende ist.

5. Batteriepack (10, 20, 30, 40, 50) nach einem der vorhergehenden Ansprüche, wobei die erste abgeschrägte Kante (214) in einem stumpfen Winkel bezüglich einer zu einer Außenfläche (212) des ersten Kanals (210) senkrechten Achse ausgerichtet ist, und/oder wobei die zweite abgeschrägte Kante (234) in einem stumpfen Winkel bezüglich einer zu einer Außenfläche (232) des zweiten Kanals (230) senkrechten Achse ausgerichtet ist.

6. Batteriepack (10, 20, 30, 40, 50) nach einem der Ansprüche 1 bis 5, wobei der stumpfe Winkel in einem Bereich zwischen 120° und 150° liegt.

7. Batteriepack (10, 20, 30, 40, 50) nach einem der vorhergehenden Ansprüche, wobei zumindest eine Leitschaufel (217, 317) auf einer Außenfläche des ersten Kanals (210) angeordnet ist, wobei die zumindest eine Leitschaufel (217, 317) zu den Batteriezellen (100) hin vorragt.

8. Batteriepack (10, 20, 30, 40, 50) nach Anspruch 7, wobei die Leitschaufel (217, 317) eine Breite, die kleiner als die Breite der Außenfläche (212) des ersten Kanals (210), gemessen entlang der zweiten Achse (X), ist, und/oder eine Vorstehtiefe aufweist, die kleiner als eine Höhe der schrägen Seitenflächen (213a, 213b) des ersten Kanals (210), gemessen entlang des Normalenvektors (Z) der Außenfläche (212), ist.

9. Batteriepack (10, 20, 30, 40, 50) nach einem der vorhergehenden Ansprüche, wobei die Batteriezellen (100) entlang der ersten Achse (Y) in zumindest zwei oder mehr benachbarten Reihen gestapelt sind, und wobei der erste Kanal (210) und der zweite Kanal (230) eine Breite aufweisen, die sich über die zumindest zwei Reihen der gestapelten Batteriezellen (100) erstreckt.

10. Batteriepack (10, 20, 30, 40, 50) nach einem der vorhergehenden Ansprüche, wobei ein Verhältnis der Fläche des Querschnitts des Einlasses (211) und der Fläche des Querschnitts des Auslasses (231) in einem Bereich zwischen 0,5 und 2 liegt, und/oder wobei ein Verhältnis der Fläche des Querschnitts des Einlasses (211) und der Fläche der Summe der Querschnitte aller Kanäle (112) in einem Bereich zwischen 0,5 und 2 liegt.

11. Batteriepack (10, 20, 30, 40, 50) nach einem der vorhergehenden Ansprüche, wobei ein Kühlkörper (110) zwischen jedem Paar benachbarter Batteriezellen (100) angeordnet ist, wobei der Kühlkörper (110) eine Vielzahl von Gräben (112), die die Kanäle ausbilden, aufweist, die ausgebildet sind, einen Strömungskanal für ein Wärmeträgermedium zwischen dem ersten Kanal (210) und dem zweiten Kanal (230) bereitzustellen.

12. Batteriepack (10, 20, 30, 40, 50) nach einem der vorhergehenden Ansprüche 1-10, wobei der zumindest eine Kanal durch eine Lücke zwischen benachbarten Batteriezellen (100) ausgebildet ist.

## Revendications

1. Bloc-batterie (10, 20, 30, 40, 50) comprenant une pluralité d'éléments d'accumulateur (100) empilés le long d'un premier axe ; et un boîtier (200) apte à recevoir la pluralité d'éléments d'accumulateur (100), dans lequel le boîtier (200) comprend un corps principal (220) apte à supporter la pluralité d'éléments d'accumulateur (200), un premier conduit (210) s'étendant le long du premier axe et agencé d'un premier côté du corps principal (220), le premier conduit (210) comprenant un orifice d'entrée d'air (211) à une première extrémité du premier conduit (210) et un premier biseau (214) à une deuxième extrémité du premier conduit (210), la deuxième extrémité étant opposée à la première extrémité, et le premier conduit (210) étant apte à fournir de l'air aux éléments d'accumulateur (100) ; et au moins un canal formé entre les éléments d'accumulateur (100), l'au moins un canal étant relié au premier conduit (210), dans lequel le premier conduit (210) comprend une surface extérieure (212) et des surfaces latérales inclinées (213a, 213b) disposées des deux côtés de la surface extérieure (212), dans lequel chacune des surfaces latérales inclinées (213a, 213b) est orientée en formant un angle obtus par rapport à un axe perpendiculaire à la surface extérieure (212), comprenant en outre un deuxième conduit (230) s'étendant le long d'un premier axe et étant disposé d'un deuxième côté du corps principal (220), le deuxième côté étant le côté opposé au premier côté, le deuxième conduit (230) comprenant un orifice de sortie d'air (231) et étant apte à expulser de l'air vers l'extérieur, dans lequel l'au moins un canal est relié au deuxième conduit (230),
**caractérisé en ce que** :
le deuxième conduit (230) comprend une surface extérieure (232) et des surfaces latérales inclinées (233a, 233b) disposées des deux côtés de la surface extérieure (232), dans lequel chacune des surfaces latérales inclinées (233a, 233b) est orientée en formant un angle obtus par rapport à un axe perpendiculaire à la surface extérieure (232).

2. Bloc-batterie (10, 20, 30, 40, 50) selon la revendication 1, dans lequel le premier côté du corps principal (220) est le côté supérieur des éléments d'accumulateur (100) et le deuxième côté est le côté inférieur des éléments d'accumulateur (100).

3. Bloc-batterie (10, 20, 30, 40, 50) selon l'une quelconque des revendications précédentes, dans lequel le premier conduit (210) et/ou le deuxième conduit (230) s'étendent sur toute la longueur et toute la largeur des éléments d'accumulateur empilés (100).

4. Bloc-batterie (10, 20, 30, 40, 50) selon l'une quelconque des revendications 2 à 4 précédentes, dans lequel un deuxième biseau (234) est disposé à la première extrémité du deuxième conduit (230), la première extrémité étant l'extrémité opposée à l'extrémité à laquelle est formé l'orifice de sortie (231).

5. Bloc-batterie (10, 20, 30, 40, 50) selon l'une quelconque des revendications précédentes, dans lequel le premier biseau (214) est orienté en formant un angle obtus par rapport à un axe perpendiculaire à une surface extérieure (212) du premier conduit (210) et/ou dans lequel le deuxième biseau (234) est orienté en formant un angle obtus par rapport à un axe perpendiculaire à une surface extérieure (232) du deuxième conduit (230).

6. Bloc-batterie (10, 20, 30, 40, 50) selon l'une quelconque des revendications 1 à 5, dans lequel l'angle obtus est compris entre 120° et 150°.

7. Bloc-batterie (10, 20, 30, 40, 50) selon l'une quelconque des revendications précédentes, dans lequel au moins une aube de guidage (217, 317) est disposée sur une surface extérieure du premier conduit (210), l'au moins une aube de guidage (217, 317) faisant saillie vers les éléments d'accumulateur (100).

8. Bloc-batterie (10, 20, 30, 40, 50) selon la revendication 7, dans lequel l'aube de guidage (217, 317) a une largeur inférieure à celle de la surface extérieure (212) du premier conduit (210), mesurée le long du deuxième axe (X), et/ou a une profondeur de saillie inférieure à une hauteur des surfaces latérales inclinées (213a, 213b) du premier conduit (210), mesurée le long du vecteur normal (Z) à la surface extérieure (212).

9. Bloc-batterie (10, 20, 30, 40, 50) selon l'une quelconque des revendications précédentes, dans lequel les éléments d'accumulateur (100) sont empilés le long du premier axe (Y) dans au moins deux ou plus de deux rangées adjacentes, et le premier conduit (210) et le deuxième conduit (230) ont une largeur s'étendant sur les au moins deux rangées d'éléments d'accumulateur empilés (100).

10. Bloc-batterie (10, 20, 30, 40, 50) selon l'une quelconque des revendications précédentes, dans lequel un rapport de la superficie de la section transversale de l'orifice d'entrée (211) à la superficie de la section transversale de l'orifice de sortie (231) est compris entre 0,2 et 2, et/ou dans lequel un rapport de la superficie de la section transversale de l'orifice d'entrée (211) à la superficie de la somme des sections transversales de tous les canaux (112) est compris entre 0,5 et 2.

11. Bloc-batterie (10, 20, 30, 40, 50) selon l'une quelconque des revendications précédentes, dans lequel un puits thermique (110) est disposé entre chaque paire d'éléments d'accumulateur adjacents (100), chaque puits thermique (110) comprenant une pluralité de tranchées (112) formant les canaux qui sont aptes à assurer un passage d'écoulement d'un milieu de transfert thermique entre le premier conduit (210) et le deuxième conduit (230).

12. Bloc-batterie (10, 20, 30, 40, 50) selon l'une quelconque des revendications 1 à 10 précédentes, dans lequel l'au moins un canal est formé par un interstice entre des éléments d'accumulateur adjacents (100).
